# EUROPEAN PATENT APPLICATION

(11) **EP 3 026 030 A1**
(43) Date of publication of application: **01.06.2016**
(21) Application number: 15196470.7
(22) Date of filing: 26.11.2015
(51) Int. Cl.: C03C 17/245, G04B 39/00

(54) **OPTICAL COMPONENT AND TIMEPIECE**

(30) Priority: 28.11.2014 JP 2014242177
(71) Applicant: Seiko Epson Corporation, Tokyo 163 (JP)
(72) Inventor: Furusato, Daiki, Nagano, 392-8502 (JP)
(74) Representative: Hoffmann Eitle

(57) **Abstract**

An optical component includes: a base material; and a titanium oxide layer composed mainly of titanium oxide and containing at least one element selected from the group consisting of Nb, Si, Zr, Ta, Al, and Hf as an accessory component. The content of the accessory component in the titanium oxide layer is preferably 0.01 mass% or more and 1.0 mass% or less.

## Description

### BACKGROUND

### 1. Technical Field

The present invention relates to an optical component and a timepiece.

### 2. Related Art

In an optical component such as a cover glass for a timepiece, in general, a material having high transparency such as any of various glass materials and various plastic materials is used.

In such an optical component, for example, a film such as an antireflection film for the purpose of preventing undesired light reflection is sometimes provided (see, for example, JP-A-2010-37115).

However, in the related art, adhesion of dirt due to static electricity or the like cannot be effectively prevented while ensuring the light transmittance of the optical component.

### SUMMARY

An advantage of some aspects of the invention is to provide an optical component having an excellent antistatic function while having sufficient light transmittance, and also to provide a timepiece including an optical component having an excellent antistatic function while having sufficient light transmittance.

Such an advantage is achieved by aspects of the invention described below.

An optical component according to an aspect of the invention includes : a base material; and a titanium oxide layer composed mainly of titanium oxide and containing at least one element selected from the group consisting of Nb, Si, Zr, Ta, Al, and Hf as an accessory component.

According to this configuration, an optical component having an excellent antistatic function while having sufficient light transmittance can be provided.

In the optical component according to the aspect of the invention, it is preferable that the element as the accessory component is an element which constitutes a composite oxide with titanium.

According to this configuration, the occurrence of a defect in appearance such as color unevenness or the occurrence of a problem such as a decrease in adhesiveness between the base material and the titanium oxide layer can be more effectively prevented.

In the optical component according to the aspect of the invention, it is preferable that the content of the accessory component in the titanium oxide layer is 0.01 mass% or more and 1.0 mass% or less.

According to this configuration, the antistatic function can be made particularly excellent while making the light transmittance of the titanium oxide layer particularly high.

In the optical component according to the aspect of the invention, it is preferable that the thickness of the titanium oxide layer is 5 nm or more and 30 nm or less.

According to this configuration, the durability, antistatic function, and the like of the optical component can be made particularly excellent while effectively preventing the optical property of the optical component from being adversely affected.

In the optical component according to the aspect of the invention, it is preferable that the base material is composed of a material containing at least one member selected from the group consisting of a silicate glass, a sapphire glass, and a plastic.

These substances have excellent transparency, and therefore, the optical property of the optical component can be made particularly excellent. Further, the adhesiveness between the base material and the titanium oxide layer can be made particularly excellent, and thus, the durability and reliability of the optical component can be made particularly excellent.

It is preferable that the optical component according to the aspect of the invention is a cover glass for a timepiece.

On a rear surface side of the cover glass, time-displaying members such as a dial plate and hands are generally disposed, and therefore, the cover glass (optical component) is a member which is strongly required to have visibility of a dial plate and the like through the cover glass. Therefore, the cover glass is a member in which a problem of decreasing the visibility particularly remarkably occurs when dirt such as dust adheres to the cover glass due to static electricity. Further, in the case where the cover glass is undesirably charged with electricity, due to the effect, the hands such as an hour hand may be deformed, and therefore, a breakdown or the like of the timepiece may be caused due to such deformation. On the other hand, in the case where the invention is applied to a cover glass for a timepiece, the occurrence of the problem as described above can be effectively prevented. Therefore, by applying the invention to a cover glass for a timepiece, the effect of the invention is more remarkably exhibited.

Further, in the optical component according to the aspect of the invention, excellent light transmittance can be ensured, and the visibility of the time-displaying members such as a dial plate and hands disposed on the rear surface side of the cover glass can be made particularly excellent.

A timepiece according to another aspect of the invention includes the optical component according to the aspect of the invention.

According to this configuration, a timepiece including the optical component having an excellent antistatic function while having sufficient light transmittance can be provided.

According to the aspects of the invention, an optical component having an excellent antistatic function while having sufficient light transmittance can be provided, and also a timepiece including the optical component having an excellent antistatic function while having sufficient light transmittance can be provided.

### BRIEF DESCRIPTION OF THE DRAWINGS

The invention will be described with reference to the accompanying drawings, wherein like numbers reference like elements.
FIG. 1 is a cross-sectional view schematically showing a first embodiment of an optical component according to the invention.
FIG. 2 is a cross-sectional view schematically showing a second embodiment of an optical component according to the invention.
FIG. 3 is a partial cross-sectional view showing a preferred embodiment of a timepiece (portable timepiece) according to the invention.

### DESCRIPTION OF EXEMPLARY EMBODIMENTS

Hereinafter, preferred embodiments of the invention will be described in detail with reference to the accompanying drawings.

### Optical Component

First, an optical component according to the invention will be described.

### First Embodiment

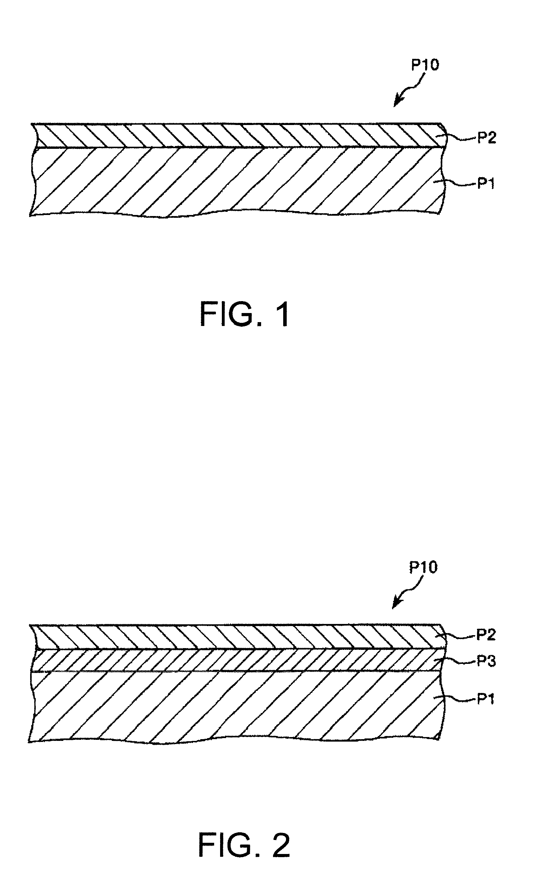

FIG. 1 is a cross-sectional view schematically showing a first embodiment of an optical component according to the invention.

As shown in FIG. 1, an optical component P10 of this embodiment includes a base material P1 and a titanium oxide layer P2 composed mainly of titanium oxide. In the titanium oxide layer P2, at least one element selected from the group consisting of Nb, Si, Zr, Ta, Al, and Hf is contained as an accessory component.

According to such a configuration, the optical component P10 exhibits an antistatic function while ensuring sufficient light transmittance as a whole. In other words, the titanium oxide layer P2 can function as an antistatic film. As a result, for example, the adhesion of dirt such as dust due to static electricity can be prevented, and thus, the optical component P10 can stably exhibit the intrinsically possessed optical property.

Such an excellent effect is obtained by the factor that the titanium oxide layer P2 is composed mainly of titanium oxide and also by the factor that the titanium oxide layer P2 contains a given accessory component, and the excellent effect as described above is not obtained by the configuration devoid of either factor. That is, even if the optical component has a layer composed mainly of titanium oxide, a sufficient antistatic function is not obtained unless a given accessory component is contained in the layer. Further, even if the optical component has a layer containing a component listed above as the accessory component, a sufficient light transmittance and the like cannot be ensured unless the layer is composed mainly of titanium oxide, and therefore, the function as the optical component becomes significantly low.

### Base Material

The base material P1 is generally a member which constitutes a main part of the optical component P10 and has light transmittance.

The refractive index of the base material P1 for a light with a wavelength of 589 nm is preferably 1.43 or more and 1. 85 or less, more preferably 1.45 or more and 1.78 or less.

According to this, the optical property of the optical component P10 can be made particularly excellent.

The constituent material of the base material P1 is not particularly limited, and for example, various glasses, various plastics, and the like can be used. However, it is preferably a material containing at least one member selected from the group consisting of a silicate glass (a quartz glass or the like), a sapphire glass, and a plastic.

These substances have excellent transparency. Further, when the base material P1 is composed of such a material, the adhesiveness between the base material P1 and the titanium oxide layer P2 can be made particularly excellent, and thus, the durability and reliability of the optical component P10 can be made particularly excellent.

In particular, in the case where the base material P1 contains at least one of a silicate glass and a sapphire glass, excellent optical properties such as particularly excellent light transmittance and a moderate refractive index are obtained, and also the adhesiveness between the base material P1 and the titanium oxide layer P2 can be made further excellent, and thus, the durability and reliability of the optical component P10 can be made further excellent.

Examples of a plastic material constituting the base material P1 include various thermoplastic resins and various thermosetting resins, and specific examples thereof include polyolefins such as polyethylene, polypropylene, ethylene-propylene copolymers, and ethylene-vinyl acetate copolymers (EVA), cyclic polyolefins (COP), modified polyolefins, polyvinyl chloride, polyvinylidene chloride, polystyrene, polyamides (for example, nylon 6, nylon 46, nylon 66, nylon 610, nylon 612, nylon 11, nylon 12, nylon 6-12, and nylon 6-66), polyimides, polyamideimides, polycarbonate (PC), poly-(4-methylpentene-1), ionomers, acrylic resins, polymethyl methacrylate, acrylonitrile-butadiene-styrene copolymers (ABS resins), acrylonitrile-styrene copolymers (AS resins), butadiene-styrene copolymers, polyoxymethylene, polyvinyl alcohol (PVA), ethylene-vinyl alcohol copolymers (EVOH), polyesters such as polyethylene terephthalate (PET), polybutylene terephthalate (PBT), and polycyclohexane terephthalate (PCT), polyether, polyether ketone (PEK), polyether ether ketone (PEEK), polyether imide, polyacetal (POM), polyphenylene oxide, modified polyphenylene oxide, polysulfone, polyether sulfone, polyphenylene sulfide, polyarylate, aromatic polyesters (liquid crystal polymers), polytetrafluoroethylene, polyvinylidene fluoride, other fluororesins, various thermoplastic elastomers such as styrene-based, polyolefin-based, polyvinyl chloride-based, polyurethane-based, polyester-based, polyamide-based, polybutadiene-based, trans-polyisoprene-based, fluororubber-based, and chlorinated polyethylene-based elastomers, epoxy resins, phenolic resins, urea resins, melamine resins, unsaturated polyesters, silicone-based resins, urethane-based resins, poly-para-xylylene resins such as poly-para-xylylene, poly-monochloro-para-xylylene, poly-dichloro-para-xylylene, poly-monofluoro-para-xylylene, and poly-monoethyl-para-xylylene, and also include copolymers, blends, and polymer alloys composed mainly of these materials. Among these, one type or two or more types in combination (for example, as a blend resin, a polymer alloy, a stacked body, or the like) can be used.

### Titanium Oxide Layer

The titanium oxide layer P2 is composed mainly of titanium oxide and contains at least one element selected from the group consisting of Nb, Si, Zr, Ta, Al, and Hf as an accessory component.

The content of titanium (Ti) in the titanium oxide layer P2 is preferably 45 mass% or more and 75 mass% or less, more preferably 50 mass% or more and 70 mass% or less.

According to this, the antistatic function can be made particularly excellent while making the light transmittance of the titanium oxide layer P2 particularly high.

The content of oxygen (O) in the titanium oxide layer P2 is preferably 25 mass% or more and 55 mass% or less, more preferably 30 mass% or more and 50 mass% or less.

The content of an element as the accessory component (in the case where multiple types of elements are contained, the sum of the contents of these elements) in the titanium oxide layer P2 is preferably 0.01 mass% or more and 1.0 mass% or less, more preferably 0.05 mass% or more and 0.9 mass% or less.

According to this, while making the light transmittance of the titanium oxide layer P2 particularly high, the antistatic function can be made particularly excellent.

The element as the accessory component may be contained in any form in the titanium oxide layer P2, however, it is preferably an element which constitutes a composite oxide with titanium.

According to this, the occurrence of a defect in appearance such as color unevenness or the occurrence of a problem such as a decrease in adhesiveness between the base material P1 and the titanium oxide layer P2 can be more effectively prevented.

The accessory component to be contained in the titanium oxide layer P2 may be any as long as it is at least one element selected from the group consisting of Nb, Si, Zr, Ta, Al, and Hf, but is particularly preferably Nb.

According to this, both of the light transmittance and the antistatic function can be achieved at higher levels. Further, the adhesiveness to the above-described base material P1 can be made particularly excellent, and thus, the durability and reliability of the optical component P10 can be made particularly excellent.

In the case where Nb is contained in the titanium oxide layer P2 as the accessory component, the content of Nb in the titanium oxide layer P2 is preferably 0.01 mass% or more and 1.0 mass% or less, more preferably 0.05 mass% or more and 0.8 mass% or less.

According to this, the effect as described above is more remarkably exhibited.

The content ratio of Nb to the entire accessory components to be contained in the titanium oxide layer P2 is preferably 50 mass% or more, more preferably 60 mass% or more.

According to this, the effect as described above is more remarkably exhibited.

The titanium oxide layer P2 may contain a component other than the above-described components. Examples of such a component include a component which is used for a transparent electrode such as In and Sn.

The thickness of the titanium oxide layer P2 is preferably 5 nm or more and 30 nm or less, more preferably 7 nm or more and 25 nm or less.

According to this, the durability, antistatic function, and the like of the optical component P10 can be made particularly excellent while effectively preventing the optical property of the optical component P10 from being adversely affected.

Examples of the optical component include various lenses (including microlenses, lenticular lenses, fresnel lenses, and the like) such as projector lenses, camera lenses, and eyeglass lenses, filters (camera low-pass filters, edge filters, UV cut filters, IR cut filters, and the like), light transmitting plates, dust-proof glasses, radiator plates, cover glasses for a timepiece, rear lids for a timepiece, and light transmitting dial plates (for example, dial plates for a solar timepiece).

Among these, the optical component is preferably a cover glass for a timepiece.

On a rear surface side of the cover glass, time-displaying members such as a dial plate and hands are generally disposed, and therefore, the cover glass (optical component) is a member which is strongly required to have visibility of a dial plate and the like through the cover glass. Therefore, the cover glass is a member in which a problem of decreasing the visibility particularly remarkably occurs when dirt such as dust adheres to the cover glass due to static electricity. Further, in the case where the cover glass is undesirably charged with electricity, due to the effect, the hands such as an hour hand may be deformed, and therefore, a breakdown or the like of the timepiece may be caused due to such deformation. On the other hand, in the case where the invention is applied to a cover glass for a timepiece, the occurrence of the problem as described above can be effectively prevented. Therefore, by applying the invention to a cover glass for a timepiece, the effect of the invention is more remarkably exhibited.

Further, in the optical component according to the invention, excellent light transmittance can be ensured, and the visibility of the time-displaying members such as a dial plate and hands disposed on the rear surface side of the cover glass can be made particularly excellent.

### Second Embodiment

FIG. 2 is a cross-sectional view schematically showing a second embodiment of the optical component according to the invention. In the following description, different points from the above embodiment will be mainly described, and the description of the same matter will be omitted.

As shown in FIG. 2, an optical component P10 of this embodiment includes a base material P1, a titanium oxide layer P2, and a foundation layer P3. That is, the optical component P10 of this embodiment has the same configuration as the above embodiment except that it has the foundation layer P3 between the base material P1 and the titanium oxide layer P2.

In this manner, by including the foundation layer P3, for example, the adhesiveness between the base material P1 and the titanium oxide layer P2 (the adhesiveness through the foundation layer P3) can be made particularly excellent, and thus, the durability and reliability of the optical component P10 can be made particularly excellent.

Examples of a constituent material of the foundation layer P3 include metal oxides typified by SiO₂.

The thickness of the foundation layer P3 is not particularly limited, but is preferably 5 nm or more and 50 nm or less, more preferably 7 nm or more and 30 nm or less.

In the configuration shown in the drawing, only one foundation layer P3 is formed, however, the optical component P10 may include multiple foundation layers between the base material P1 and the titanium oxide layer P2.

### Method for Producing Optical Component

Next, a method for producing the optical component will be described.

The optical component P10 may be produced by any method, but can be favorably produced by using for example, a method including a base material preparation step (1a) of preparing a base material P1 and a titanium oxide layer formation step (lb) of forming a titanium oxide layer P2 composed mainly of titanium oxide and containing at least one element selected from the group consisting of Nb, Si, Zr, Ta, Al, and Hf as an accessory component on the base material P1 by a gas-phase deposition method.

### Base Material Preparation Step

In this step, a base material P1 is prepared (la).

As the base material P1, a material described above can be used, however, a material subjected to a pretreatment such as a washing treatment or a lyophilization treatment may be used. Further, as the pretreatment, a mask may be formed in a region where the titanium oxide layer P2 is not desired to be formed. In this case, as a post-treatment, a mask removal step may be included.

### Titanium Oxide Layer Formation Step

In this step, a titanium oxide layer P2 is formed by a gas-phase deposition method (1b).

Examples of the gas-phase deposition method which can be adopted in this step include chemical vapor deposition (CVD) methods such as thermal CVD, plasma CVD, and laser CVD, vacuum vapor deposition, sputtering, ion beam-assisted vapor deposition, and ion plating. By using such a gas-phase deposition method, the light transmittance can be made particularly excellent.

In particular, from the viewpoint that the configuration of a deposition device is relatively simple, and the titanium oxide layer P2 having stable properties can be formed, ion beam-assisted vapor deposition is preferred.

In the case where the formation of the titanium oxide layer P2 is performed by ion beam-assisted vapor deposition, as a vapor deposition source, for example, a material containing a composite oxide of titanium and the above-described element may be used, however, a material containing titanium oxide and an oxide of the above-described element may be used.

According to this, a material (vapor deposition source) for forming the titanium oxide layer P2 can be prepared as a relatively inexpensive material. Further, the adjustment of the ratio of titanium (Ti) to the above-described element, or the like can be easily and reliably performed, and thus, the titanium oxide layer P2 having a desired composition can be easily and reliably formed.

The above-described element may be an element which is in the form other than an oxide in the vapor deposition source.

In the case where this step is performed by ion beam-assisted vapor deposition, this step may be performed by using multiple types of vapor deposition sources. For example, a vapor deposition source containing titanium oxide (a first vapor deposition source) and a vapor deposition source containing the above-described element (a second vapor deposition source having a higher content of the above-described element than the first vapor deposition source) may be used in combination.

According to this, the occurrence of an undesired variation in the composition of the titanium oxide layer P2 to be formed due to a difference in ease of evaporation of the multiple types of components to be used in the formation of the titanium oxide layer P2, or the occurrence of an undesired variation in the properties among individual components when multiple optical components P10 are produced can be more reliably prevented. Further, by adjusting the heating conditions or the like in this step (for example, the heating temperature for at least one vapor deposition source is changed over time, or the like), the composition of the titanium oxide layer P2 to be formed can be changed (for example, changed gradiently) along the thickness direction or the like.

In the case where this step is performed by, for example, sputtering, the same effect as described above is obtained also when multiple types of targets are used.

Further, in the case where the optical component P10 having the foundation layer P3 between the base material P1 and the titanium oxide layer P2 as shown in FIG. 2 is produced, for example, by including a foundation layer formation step of forming the foundation layer P3 on the base material P1 prior to the titanium oxide layer formation step, the optical component P10 can be favorably produced.

In the case of using such a material, examples of a method for applying the material for forming the foundation layer include various printing methods such as an inkjet method, various coating methods such as roll coating, spray coating, spin coating, and brush coating, and dipping (a dipping method).

Further, for example, the foundation layer P3 may be formed by a gas-phase deposition method, for example, a chemical vapor deposition (CVD) method such as thermal CVD, plasma CVD, or laser CVD, vacuum vapor deposition, sputtering, ion beam-assisted vapor deposition, ion plating, or the like.

According to this, the adhesiveness between the base material P1 and the foundation layer P3, and the adhesiveness between the foundation layer P3 and the titanium oxide layer P2 are made particularly excellent, and thus, the durability and reliability of the optical component P10 can be made particularly excellent. Further, the transparency of the foundation layer P3 can be made particularly high, and thus, the optical property of the optical component P10 as a whole can be further improved. Further, for example, the formation of the foundation layer P3 and the formation of the titanium oxide layer P2 can be performed continuously, and thus, the productivity of the optical component P10 can be made particularly excellent.

According to the production method as described above, an optical component having an excellent antistatic function while having sufficient light transmittance can be efficiently produced.

### Timepiece

Next, a timepiece according to the invention will be described.

The timepiece according to the invention includes the optical component according to the invention as described above.

According to this, a timepiece including the optical component having an excellent antistatic function while having sufficient light transmittance can be provided, and for example, a timepiece in which the occurrence of an adverse effect of static electricity is effectively prevented can be provided, and thus, the reliability of the timepiece as a whole can be made high. Further, a timepiece capable of favorably visually recognizing a state on a rear surface side of the optical component can be provided, and the aesthetic appearance (aestheticity) of the timepiece as a whole can be made excellent, and thus, the value as an ornament can be increased. In addition, for example, the visibility of the time and the like can be improved, and therefore, also the function (practicality) as a daily necessity becomes excellent.

The timepiece according to the invention may be any as long as it includes the optical component according to the invention as at least one optical component, and as the other components, known components can be used, however, hereinafter, one example of the configuration of the timepiece when the optical component according to the invention is applied to the cover glass will be representatively described.

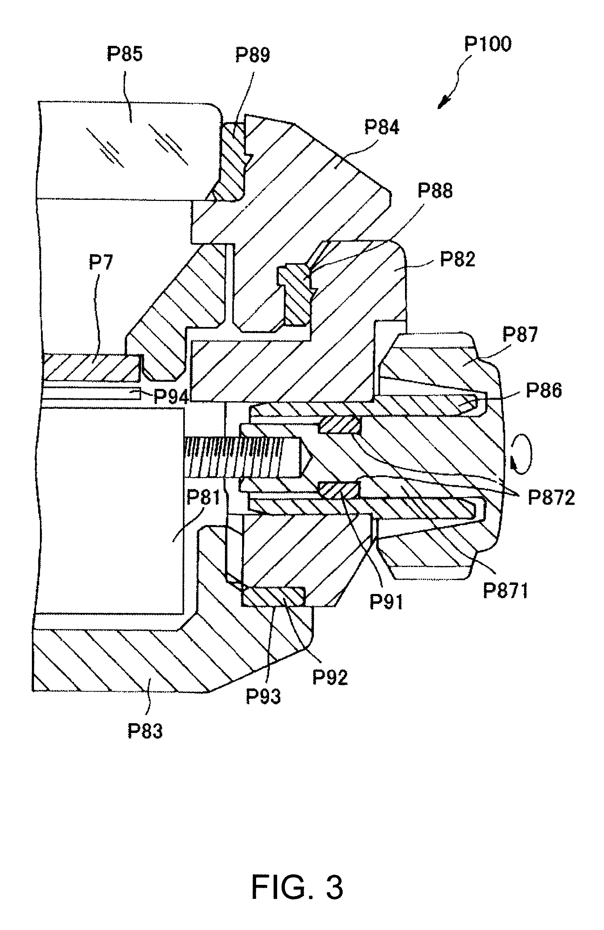

FIG. 3 is a partial cross-sectional view showing a preferred embodiment of the timepiece (portable timepiece) according to the invention.

As shown in FIG. 3, a wristwatch (portable timepiece) P100 of this embodiment includes a barrel (case) P82, a rear lid P83, a bezel (frame) P84, and a cover glass (a cover glass for a timepiece) P85. In the case P82, a dial plate for a timepiece (a dial plate) P7, a solar cell P94, and a movement P81 are housed, and further, hands (indicator hands) not shown in the drawing and the like are also housed.

The cover glass P85 is composed of the optical component according to the invention as described above.

According to this, the visibility of the dial plate P7, the hands (indicator hands), and the like can be enhanced. Further, the dial plate P7 and the like are members which have a large influence on the appearance of the entire timepiece, however, the cover glass P85 has excellent light transmittance, and therefore, the dial plate P7 and the like can be favorably visually recognized, and thus, the aesthetic appearance (aestheticity) of the watch as a whole can be made particularly excellent.

The movement P81 drives the indicator hands by utilizing the electromotive force of the solar cell P94.

Although not shown in FIG. 3, in the movement P81, for example, an electric double-layer capacitor which stores the electromotive force of the solar cell P94, a lithium ion secondary buttery, a crystal oscillator as a time reference source, a semiconductor integrated circuit which generates a driving pulse for driving the watch based on the oscillation frequency of the crystal oscillator, a step motor for driving the indicator hands every second by receiving this driving pulse, a gear train mechanism for transmitting the movement of the step motor to the indicator hands, and the like are included.

Further, the movement P81 includes an antenna for receiving a radio wave (not shown), and has a function to perform time adjustment and the like using the received radio wave.

The solar cell P94 has a function to convert light energy into electrical energy. The electrical energy converted by the solar cell P94 is utilized for driving the movement P81 or the like.

The solar cell P94 has, for example, a PIN structure in which a p-type impurity and an n-type impurity are selectively introduced into a non-single crystal silicon thin film, and further, an i-type non-single crystal silicon thin film having a low impurity concentration is provided between a p-type non-single crystal silicon thin film and an n-type non-single crystal silicon thin film.

In the barrel P82, a winding stem pipe P86 is fitted and fixed, and in this winding stem pipe P86, a shaft P871 of a stem P87 is rotatably inserted.

The barrel P82 and the bezel P84 are fixed to each other with a plastic packing P88, and the bezel P84 and the cover glass P85 are fixed to each other with a plastic packing P89.

With the barrel P82, the rear lid P83 is fitted (or threadedly engaged), and in a bonding portion (seal portion) P93 of these members, a ring-shaped rubber packing (rear lid packing) P92 is inserted in a compressed state. According to this configuration, the seal portion P93 is sealed in a liquid-tight manner, whereby a water-proof function is obtained.

A groove P872 is formed in a middle part on an outer periphery of the shaft P871 of the stem P87, and in this groove P872, a ring-shaped rubber packing (stem packing) P91 is fitted. The rubber packing P91 is in close contact with the inner peripheral surface of the winding stem pipe P86 and compressed between the inner peripheral surface and the inner surface of the groove P872. According to this configuration, liquid-tight sealing is provided between the stem P87 and the winding stem pipe P86, so that a water-proof function is obtained. Incidentally, when the stem P87 is rotated, the rubber packing P91 rotates along with the shaft P871 and slides in the circumferential direction while being in close contact with the inner peripheral surface of the winding stem pipe P86.

In the above description, as one example of the timepiece, a timepiece including a cover glass as the optical component according to the invention is described, however, the timepiece according to the invention may be a timepiece including, for example, a component to which the optical component according to the invention is applied as the component other than the cover glass. For example, the rear lid or the like may be one composed of the optical component according to the invention. According to this, for example, the optical component according to the invention is applied to a member closer to the movement, and therefore, the movement can be more effectively prevented from being electrically adversely affected, and thus, the reliability of the timepiece as a whole can be made particularly high. Further, the aesthetic appearance (aestheticity) of the timepiece as a whole can be improved.

Further, in the above description, as one example of the timepiece, a wristwatch (portable timepiece) as a solar radio timepiece is described, however, the invention can be also applied to other types of timepieces such as portable timepieces other than wristwatches, table clocks, and wall clocks in the same manner. Further, the invention can be also applied to any timepieces such as solar timepieces other than solar radio timepieces and radio timepieces other than solar radio timepieces.

Hereinabove, preferred embodiments of the invention are described, however, the invention is not limited to those described above.

For example, in the optical component and the timepiece according to the invention, the configuration of each part can be replaced with an arbitrary configuration exhibiting a similar function, and also an arbitrary configuration can be added.

For example, the optical component may include a protective film or the like in addition to the base material and the titanium oxide layer.

Further, the optical component according to the invention may include multiple titanium oxide layers. For example, in the above-described embodiment, a case where the titanium oxide layer is provided on one surface side of the base material is described, however, the titanium oxide layer may be provided on both surface sides of the base material. Further, the optical component may have a configuration in which multiple titanium oxide layers are stacked on one another through an intermediate layer.

Further, in the above-described embodiment, a case where the optical component according to the invention is used as a constituent component of a timepiece is mainly described, however, the optical component according to the invention is not limited to an optical component to be used as a constituent component of a timepiece, and may be an optical component to be applied to, for example, various electrical devices including optical devices such as cameras (including video cameras, cameras mounted on cellular phones (including smart phones, PHS, etc.), and the like) and projectors, optical measurement devices such as microscopes, and the like, and also to eyeglasses, loupes, and the like. Further, the optical component according to the invention is not limited to an optical component to be used in combination with another member, and may be an optical component to be used alone as it is.

Further, in the production of the optical component according to the invention, other than the above-described steps, according to need, a pretreatment step, an intermediate treatment step, and a post-treatment step may be performed. For example, prior to the titanium oxide layer formation step, a step of performing a UV irradiation, plasma irradiation, or the like on the surface of the base material may be included. According to this, for example, the adhesiveness between the base material and the titanium oxide layer is made particularly excellent, and thus, the durability and reliability of the optical component can be made particularly excellent.

Further, the optical component according to the invention is not limited to those produced using the above-described method. For example, in the above-described embodiment, a case where the titanium oxide layer is formed by a gas-phase deposition method is representatively described, however, the titanium oxide layer may be formed by using, for example, a wet process such as a coating method.

### Examples

Next, specific examples of the invention will be described.

### 1. Production of Optical Component (Cover Glass)

### Example 1

By the method as described below, a cover glass as an optical component was produced.

First, a plate material (glass plate) composed of a sapphire glass was prepared as a base material (the base material preparation step), and a necessary part was cut and polished. The base material obtained by cutting and polishing had a substantially disk shape and had a size of 30 mm in diameter and 1 mm in thickness.

Subsequently, a UV irradiation treatment in which an ultraviolet ray with a wavelength of 248 nm was irradiated on the surface of the base material on the side where a titanium oxide layer was going to be formed.

Subsequently, by ion beam-assisted vapor deposition using a mixture of titanium oxide (TiO₂) and niobium oxide (Nb₂O₅) as a vapor deposition source, a titanium oxide layer was formed on the base material (the titanium oxide layer formation step), whereby a cover glass was obtained as an optical component.

The ion beam-assisted vapor deposition was performed under the following conditions: O₂ gas flow rate: 50 sccm, acceleration voltage: 700 V, and acceleration current: 700 mA. The formed titanium oxide layer had a thickness of 20 nm, and in the titanium oxide layer, the content of titanium (Ti) was 59.75 mass%, the content of niobium (Nb) was 0.21 mass%, and the content of oxygen (O) was 40.04 mass%.

### Examples 2 to 6

Optical components (cover glasses) were produced in the same manner as in the above Example 1 except that the configurations of the respective parts of the optical components were changed as shown in Table 1 by changing the conditions for the ion beam-assisted vapor deposition (including the composition of the vapor deposition source).

### Example 7

An optical component (cover glass) was produced in the same manner as in the above Example 1 except that prior to the titanium oxide layer formation step, a foundation layer composed of SiO₂ was formed on the surface of the base material (the surface on the side where the titanium oxide layer was going to be formed) (the foundation layer formation step).

The formation of the foundation layer was performed by ion beam-assisted vapor deposition. The thickness of the formed foundation layer was 20 nm.

### Examples 8 and 9

Optical components (cover glasses) were produced in the same manner as in the above Example 7 except that the configurations of the respective parts of the optical components were changed as shown in Table 1 by changing the conditions for the foundation layer.

### Comparative Example 1

An optical component (cover glass) was produced in the same manner as in the above Example 1 except that the base material (the plate material composed of a sapphire glass) was directly used as the optical component without forming a titanium oxide layer on the base material.

### Comparative Example 2

First, a plate material (glass plate) composed of a sapphire glass was prepared as a base material (the base material preparation step), and a necessary part was cut and polished. The base material obtained by cutting and polishing had a substantially disk shape and had a size of 30 mm in diameter and 1 mm in thickness.

Subsequently, a UV irradiation treatment in which an ultraviolet ray with a wavelength of 248 nm was irradiated on the surface of the base material on the side where a film was going to be formed.

Thereafter, by using silicon as a target, sputtering was performed under the following conditions, whereby a film composed of a high-refractive index layer and a low-refractive index layer was formed on one surface of the base material, whereby an optical component (cover glass) was produced. The specific stacking configuration of the film was as follows in the order from the side closer to the base material: SiO₂ (9 nm) /SiNₓ (37 nm) /SiO₂ (29 nm) /SiNₓ (26 nm) /SiO₂ (53 nm) /SiNₓ (22 nm) /SiO₂ (26 nm) /SiNₓ (107 nm) /SiO₂ (81 nm).

### Conditions for Formation of High-Refractive Index Layer: Silicon Nitride (SiNₓ)

- N₂ gas flow rate: 10.0 sccm
- Ar gas flow rate: 10.0 sccm
- Sputtering power: 2.0 kW

### Conditions for Formation of Low-Refractive Index Layer: Silicon Oxide (SiO₂)

- O₂ gas flow rate: 10.0 sccm
- Ar gas flow rate: 10.0 sccm
- Sputtering power: 1.5 kW

The volume fraction of silicon nitride (SiNₓ) from the outermost surface of the film to the depth of 150 nm was 46%.

### Comparative Example 3

An optical component (cover glass) was produced in the same manner as in the above Example 1 except that the titanium oxide layer which is composed of TiO₂ and does not contain the above-described element was formed by using titanium oxide (TiO₂) as the vapor deposition source.

### Comparative Example 4

An optical component (cover glass) was produced in the same manner as in the above Example 1 except that a layer which is composed of niobium oxide (Nb₂O₅) and does not contain Ti was formed in place of the titanium oxide layer by using niobium oxide (Nb₂O₅) as the vapor deposition source.

The configurations of the respective parts of the optical components (cover glasses) of the respective Examples and Comparative Examples are summarized and shown in Table 1. With respect to Comparative Examples 2 and 4, the conditions for the films provided in place of the titanium oxide layer are shown in the column of "Titanium oxide layer".

**Table 1**

| | Base material | Foundation layer | | Titanium oxide layer | | |
|---|---|---|---|---|---|---|
| | Constituent material | Constituent material | Thickness [nm] | Constituent material | Mass ratios of respective elements | Thickness [nm] |
| Example 1 | Sapphire glass | - | - | Composite oxide of Ti and Nb | Ti-59.75/Nb-0.21/O-40.04 | 20 |
| Example 2 | Sapphire glass | - | - | Composite oxide of Ti and Nb | Ti-59.33/Nb-0.70/O-39.97 | 20 |
| Example 3 | Sapphire glass | - | - | Composite oxide of Ti and Nb | Ti-59.90/Nb-0.03/O-40.06 | 20 |
| Example 4 | Sapphire glass | - | - | Composite oxide of Ti and Nb | Ti-59.75/Nb-0.21/O-40.04 | 5 |
| Example 5 | Sapphire glass | - | - | Composite oxide of Ti and Ta | Ti-59.75/Ta-0.25/O-40.00 | 20 |
| Example 6 | Sapphire glass | - | - | Composite oxide of Ti and Zr | Ti-59.76/Zr-0.22/O-40.02 | 20 |
| Example 7 | Sapphire glass | SiO₂ | 20 | Composite oxide of Ti and Nb | Ti-59.75/Nb-0.21/O-40.04 | 20 |
| Example 8 | Sapphire glass | SiO₂ | 50 | Composite oxide of Ti and Nb | Ti-59.75/Nb-0.21/O-40.04 | 20 |
| Example 9 | Sapphire glass | SiO₂ | 5 | Composite oxide of Ti and Nb | Ti-59.75/Nb-0.21/0-40.04 | 20 |
| Comparative Example 1 | Sapphire glass | - | - | - | - | - |
| Comparative Example 2 | Sapphire glass | - | - | SiO₂ layer/SiNₓ layer | - | 390 |
| Comparative Example 3 | Sapphire glass | - | - | TiO₂ | Ti-59.94/O-40.06 | 20 |
| Comparative Example 4 | Sapphire glass | - | - | Nb₂O₅ | Nb-69.93/0-30.07 | 20 |

### 2. Evaluation of Antistatic Property

A probe was brought into contact with the surface on the side provided with the film (the titanium oxide layer or the like) of each of the cover glasses produced in the above respective Examples and Comparative Examples, and the surface electrical resistance was measured using a surface resistance meter (Hiresta-UP MCP-HT45 manufactured by Mitsubishi Chemical Corporation), and evaluation was performed according to the following criteria. It can be said that as the surface electrical resistance is lower, the antistatic property is superior. The measurement was performed under the following environment: temperature: 25°C and humidity: 55% RH. Incidentally, in the case of Comparative Example 1, the film was not provided on both surfaces, and therefore, evaluation was performed for arbitrarily selected one surface (the same shall apply also to the following evaluation items).
A: The surface electrical resistance is less than 1E+8 Ω/□.
B: The surface electrical resistance is 1E+8 Ω/□ or more and less than 1E+9 Ω/□.
C: The surface electrical resistance is 1E+9 Ω/□ or more and less than 1E+11 Ω/□.
D: The surface electrical resistance is 1E+11 Ω/□ or more and less than 1E+15 Ω/□.
E: The surface electrical resistance is 1E+15 Ω/□ or more.

### 3. Evaluation of Light Transmittance

With respect to each of the cover glasses produced in the above respective Examples and Comparative Examples, the light transmittance of the cover glass was measured using a spectrometer U-4000 manufactured by Hitachi Co., Ltd., and evaluation was performed according to the following criteria.
A: The light transmittance is 80% or more.
B: The light transmittance is 75% or more and less than 80%.
C: The light transmittance is 70% or more and less than 75%.
D: The light transmittance is 65% or more and less than 70%.
E: The light transmittance is less than 65%.

### 4. Evaluation of Adhesiveness

Five horizontal cut lines at 2-mm intervals and five vertical cut lines at 2-mm intervals were provided on the surface to be evaluated with a cutter, and an adhesive tape (CT-18 manufactured by Nichiban Co. , Ltd.) was adhered thereto, and thereafter, the adhesive tape was peeled off at a stroke. Then, it was confirmed whether or not peeling occurred on the surface to be evaluated by visual observation, and evaluation was performed according to the following criteria.
A: No film peeling is observed.
B: The film peeling area is less than 5%.
C: The film peeling area is 5% or more and less than 20%.
D: The film peeling area is 20% or more and less than 50%.
E: The film peeling area is 50% or more.

### 5. Evaluation of Abrasion Resistance

An abrasion resistance test using silbon paper as a counter paper was performed according to JIS K5701 for the surface on the side provided with the film (the titanium oxide layer, or the like) of each of the cover glasses produced in the above respective Examples and Comparative Examples. Then, the cover glass after the abrasion resistance test was visually observed, and evaluation was performed according to the following criteria.
A: No scratches by rubbing occur.
B: Scratches by rubbing hardly occur.
C: Scratches by rubbing slightly occur.
D: Scratches by rubbing clearly occur.
E: Scratches by rubbing remarkably occur.

### 6. Production of Timepiece

By using each of the cover glasses produced in the above respective Examples and Comparative Examples, wristwatches as shown in FIG. 3 were produced. At this time, the surface on the side provided with the film (the titanium oxide layer) of the cover glass was disposed facing the inner surface side (a side facing the dial plate and the like).

### 7. Evaluation of Visibility of Dial Plate of Timepiece

With respect to each of the timepieces produced in the above respective Examples and Comparative Examples, the dial plate and the like were observed through the cover glass, and the visibility at that time was evaluated according to the following criteria.
A: The visibility of the dial plate and the like is very high.
B: The visibility of the dial plate and the like is high.
C: The visibility of the dial plate and the like is within the acceptable range.
D: The visibility of the dial plate and the like is somewhat low.
E: The visibility of the dial plate and the like is very low.

These results are shown in Table 2.

**Table 2**

| | Antistatic property | Light transmittance | Adhesiveness | Abrasion resistance | Visibility of dial plate |
|---|---|---|---|---|---|
| Example 1 | A | A | B | A | A |
| Example 2 | A | A | B | A | A |
| Example 3 | A | A | B | A | A |
| Example 4 | B | A | C | C | A |
| Example 5 | B | A | B | A | A |
| Example 6 | B | A | B | B | A |
| Example 7 | A | A | A | A | A |
| Example 8 | A | A | A | A | A |
| Example 9 | A | A | B | A | A |
| Comparative Example 1 | E | A | - | A | A |
| Comparative Example 2 | E | A | A | A | A |
| Comparative Example 3 | D | A | A | A | A |
| Comparative Example 4 | D | A | B | A | A |

As apparent from Table 2, according to the invention, the optical component had an excellent antistatic function, and also had excellent abrasion resistance and the like. In particular, with a simple configuration, excellent effects as described above could be obtained. Further, the timepieces including the optical component had high visibility of the dial plate and the like, and the aesthetic appearance (aestheticity) of the timepiece as a whole was excellent. In addition, according to the invention, the optical component could be produced with high productivity. On the other hand, in the case of Comparative Examples, satisfactory results were not obtained. In particular, in the case of Comparative Example 2 in which a film having a complicated configuration such that many layers were stacked is formed, the productivity of the optical component was particularly low.

When timepieces were produced in the same manner as in the above respective Examples and Comparative Examples except that in addition to the cover glass, also the rear lid was formed to have the same configuration as described above, the same results as described above were obtained, and the aesthetic appearance (aestheticity) of the timepieces to which the optical component according to the invention was applied (timepieces according to the invention) could be made particularly excellent.

## Claims

1. An optical component comprising:
a base material; and
a titanium oxide layer composed mainly of titanium oxide and containing at least one accessory component element selected from the group consisting of Nb, Si, Zr, Ta, Al, and Hf.

2. The optical component according to claim 1, wherein the element as the accessory component is an element which constitutes a composite oxide with titanium.

3. The optical component according to claim 1, wherein the total content of the accessory component elements in the titanium oxide layer is 0.01 mass% or more and 1.0 mass% or less.

4. The optical component according to claim 1, wherein the thickness of the titanium oxide layer is 5 nm or more and 30 nm or less.

5. The optical component according to claim 1, wherein the base material is composed of a material containing at least one member selected from the group consisting of a silicate glass, a sapphire glass, and a plastic.

6. The optical component according to claim 1, wherein the optical component is a cover glass for a timepiece.

7. A timepiece comprising the optical component according to any of claims 1-6.
